# EUROPÄISCHE PATENTANMELDUNG

(11) **EP 2 679 915 A1**
(43) Veröffentlichungstag der Anmeldung: **01.01.2014**
(21) Anmeldenummer: 13173139.0
(22) Anmeldetag: 21.06.2013
(51) Int. Cl.: F24D 3/14, F24D 13/02

(54) **Verfahren zur Beheizung von Fußböden**

(30) Priorität: 26.06.2012 DE 102012012544
(71) Anmelder: herotec GmbH Flächenheizung, 59227 Ahlen (DE)
(72) Erfinder: Heuser, Thomas, 59320 Ennigerloh (DE)
(74) Vertreter: Meinke, Dabringhaus und Partner GbR

(57) **Zusammenfassung**

Die Erfindung betrifft ein Verfahren zur Beheizung von Fußböden, bei dem in einem Plattenelement (4) Warmwasser durch ein in einem Kanal (3a) befindliches Heizrohr (2) geleitet wird. Um die Heizleistung bei der Beheizung des Fußbodens zu erhöhen, sieht das Verfahren vor, dass in dem Plattenelement (4) zusätzlich elektrischer Strom durch einen in einer Rille (7a,8a) befindlichen Heizleiter (5,6) geleitet wird.

## Beschreibung

Die Erfindung betrifft ein Verfahren zur Beheizung von Fußböden, bei dem Warmwasser durch ein in einem Kanal eines Plattenelementes befindliches Heizrohr geleitet wird.

Verfahren der eingangs genannten Art sind dem Fachmann bekannt und geläufig.

Hierzu werden Plattenelemente, vorzugsweise aus Kunststoff, mit eingeprägten Kanälen zur Aufnahme der Heizrohre verwendet. Zum Einsatz kommen dabei Plattenelemente in unterschiedlichen Gestaltungen. Insbesondere sind Plattenelemente aus Kunststoff, z.B. Polystyrol bekannt, die auf ihrer Oberfläche nach außen weisende Klemmnocken aufweisen, zwischen die die Heizrohre klemmbar sind.

Auch kommen Platten zum Einsatz, die in der Oberfläche mit einer reflektierenden Folie, z.B. einer Aluminiumfolie, versehen sind, die in der Regel dort aufkaschiert ist.

Aus dem deutschen Gebrauchsmuster DE 296 08 258 sind Plattenelemente für die Durchführung des Verfahrens der eingangs genannten Art bekannt, bei den in der Verlegelage nach oben weisende Flächen der Plattenelemente mit einer Vielzahl von fliesenartig nebeneinander angeordneten Aluminiumfolienplatten versehen sind, die der Oberflächenstruktur der Plattenelemente einschließlich der Kanäle angepasst sind.

Verfahren der eingangs genannten Art, bei denen Wasser als wärmeführendes Medium dient, das durch ein in einem Plattenelement befindliches Heizrohr geleitet wird, stellen nach wie vor ein probates Instrumentarium dar, geeignete Heizleistungen für Fußbodenheizungen zu liefern.

Allerdings ist es auch wünschenswert, die Heizleistung pro Plattenelement zu erhöhen.

Es ist deshalb Aufgabe der vorliegenden Erfindung, ein Verfahren der eingangs genannten Art derart weiterzuentwickeln, dass die Beheizung von Fußböden noch effektiver gestaltet werden kann.

Diese Aufgabe wird mit den Merkmalen des Anspruches 1 gelöst. Vorteilhafte Ausgestaltungen der Erfindung ergeben sich aus den Unteransprüchen.

Die Erfindung sieht vor, dass in dem Plattenelement zusätzlich elektrischer Strom durch einen in einer Rille befindlichen Heizleiter geleitet wird.

Die Kernidee der Erfindung ist es, sowohl das Prinzip der Warmwasserheizung als auch das Prinzip der Elektroheizung in eine Fußbodenheizung zu integrieren. Hierzu ist vorzugsweise vorgesehen, dass das Heizrohr und der Heizleiter in einem Wärmequerverteilerelement verlaufen, das der Oberflächenkontur des Plattenelementes einschließlich des Kanales und der Rillen angepasst ist. Entgegen dem in der Druckschrift JP H09-152 140 A offenbarten Plattenelement einer Fußbodenheizung zeichnet sich das Plattenelement gemäß der Erfindung somit dadurch aus, dass es sowohl den Heizleiter als auch das Heizrohr aufnimmt.

Ein Vorteil der Erfindung ist es, die Heizleistung pro Plattenelement durch eine zusätzliche raumsparende Verlegung von Heizleitern in einem Plattenelement zu erhöhen.

Ein Plattenelement sowie ein Wärmequerverteilerelement zur Durchführung des Verfahrens sehen die Ansprüche 5 bzw. 8 vor. Das Wärmequerverteilerelement dient der Verteilung der erzeugten Wärme.

Neben einem eingeprägten Kanal zur Aufnahme der Heizrohre weist das Plattenelement zusätzlich eine längs verlaufende Rille zur Aufnahme des Heizleiters auf. Das Plattenelement kann dabei mehr als eine längs verlaufende Rille aufweisen, wobei die Rillen vorzugsweise beidseitig des Kanales verlaufen.

Das zu dem Plattenelement korrespondierende Wärmequerverteilerelement weist dabei eine Kontur auf, die der Oberflächenkontur der Platte einschließlich der Kanäle und Rillen angepasst ist, d.h. Rillen zur Aufnahme von Heizleitern, die beabstandet und parallel zum Kanal für die Aufnahme des Heizrohres verlaufen.

Eine vorteilhafte Ausgestaltung der Erfindung sieht dabei vor, dass die Ein- und Auslaufbereiche der Rillen mit in Richtung auf das Wärmequerverteilerelement weisenden Ein- bzw. Auslaufrundungen versehen sind.

Schließlich sieht die Erfindung auch ein Fußbodenheizungselement vor, das das Plattenelement sowie das Wärmequerverteilerelement aufweist, wobei das Wärmequerverteilerelement auf der Platte aufgebracht und mit dieser verbunden ist.

Im Folgenden wird die Erfindung anhand der Zeichnungen näher erläutert. Es zeigen in schematischer Darstellung:
- Fig. 1 und 2: das Verfahren gemäß der Erfindung,
- Fig. 3: ein Wärmequerverteilerelement gemäß der Erfindung,
- Fig. 4: ein Plattenelement gemäß der Erfindung, auf dem ein Wärmequerverteilerelement gemäß der Erfindung aufgebracht ist,
- Fig. 5: eine erfindungsgemäße Vorrichtung, bei der das erfindungsgemäße Plattenelement und das erfindungsgemäße Wärmequerverteilerelement miteinander verbunden sind.

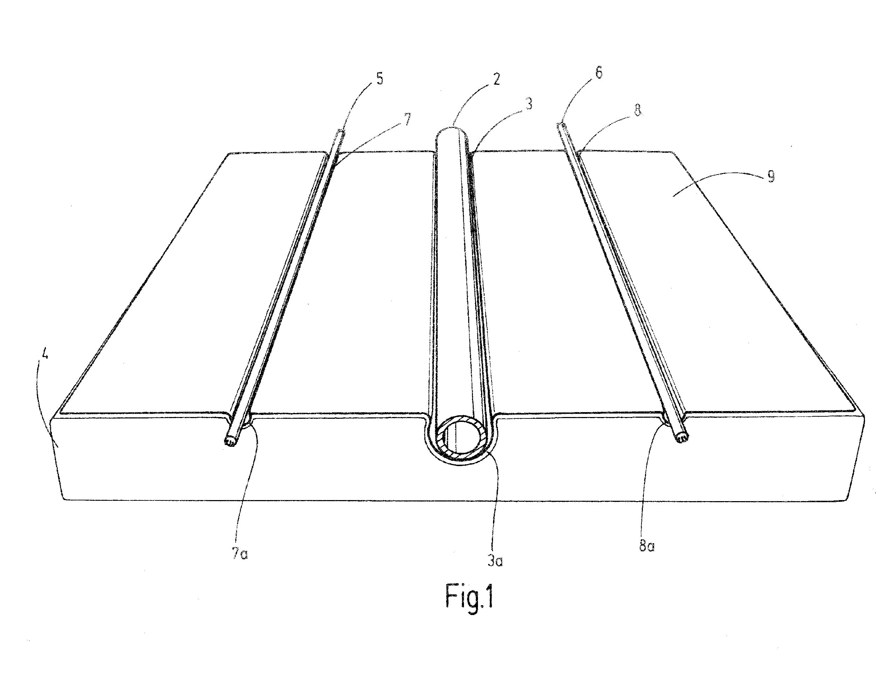

Das in Fig. 1 dargestellte erfindungsgemäße Verfahren wird anhand der Leitungen von wärmeführenden Medien in einem Fußbodenheizungskreislauf veranschaulicht, wobei die hierzu in Fig. 1 gezeigten gehörenden Komponenten ein Teilabschnitt einer in Fig. 1 nicht gezeigten Fußbodenheizung sind.

Die für die Durchführung des Verfahrens benötigten Komponenten sind zunächst das Plattenelement aus Kunststoff, das mit dem Bezugszeichen 4 versehen ist, und beispielsweise aus einem Schaumkunststoff, wie Polystyrol, hergestellt ist. Sämtliche Kanäle und Rillen liegen als Längskanäle bzw. Längsrillen vor. Das Plattenelement 4 weist einen Längskanal 3a sowie zwei Längsrillen 7a, 8a auf und ist mit einem Wärmequerverteilerelement 9, das aus Metall gefertigt ist, bestückt. Das Wärmequerverteilerelement 9 ist auf dem Plattenelement 4 aufgebracht, indem es beispielsweise vorher auf das Plattenelement 4 gelegt worden ist.

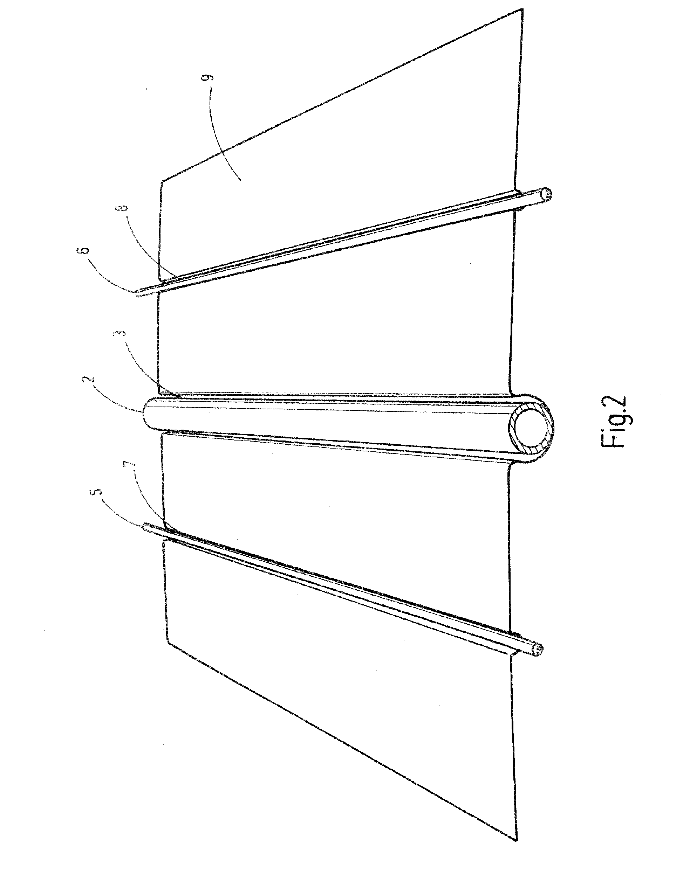

Das Wärmequerverteilerelement 9 weist ebenfalls einen Längskanal 3 sowie zwei beidseitig vor dem Längskanal 3 angeordnete Längsrillen 7, 8 auf, was auch noch einmal in Fig. 2 veranschaulich ist.

Das Verfahren zeichnet sich dadurch aus, dass entgegen dem Stand der Technik sowohl Warmwasser durch das in Fig. 1 und 2 gezeigte Heizrohr 2 als auch Strom durch die in den Fig. 1 und 2 gezeigten Heizleiter 5, 6 geleitet werden, so dass in erfindungswesentlicher Weise sowohl das Prinzip einer wasserführenden Fußbodenheizung als auch einer elektrischen Fußbodenheizung realisiert wird.

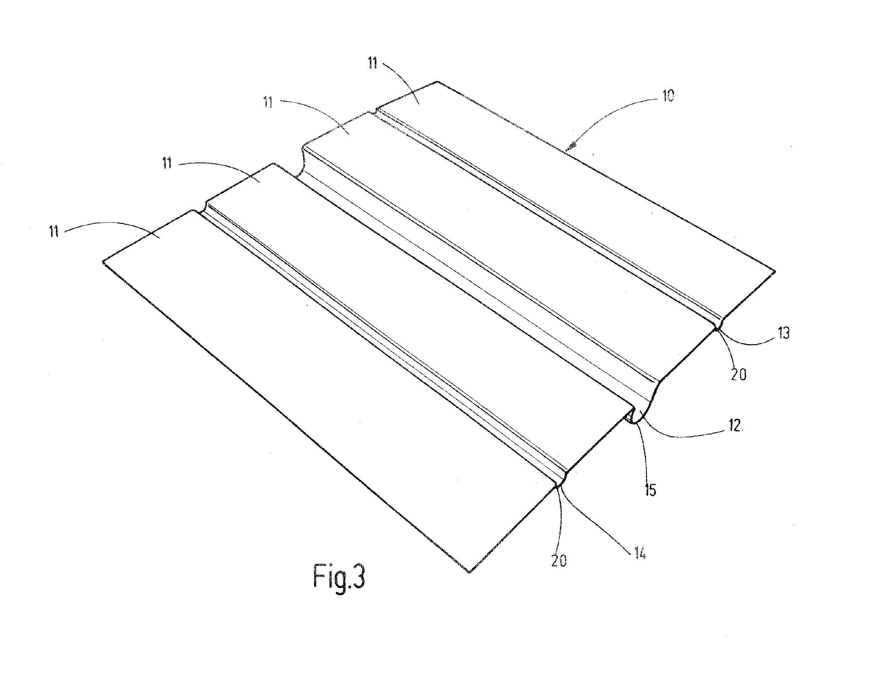

Hierzu weist, wie aus Fig. 3 hervorgeht, ein allgemein mit 10 bezeichnetes Wärmequerverteilerelement sowohl einen Längskanal 12 für die Aufnahme eines in den Fig. 1 und 2 gezeigten Heizrohres 2 als auch zwei von dem Längskanal 12 beabstandet angeordnete und parallel verlaufende Längsrillen 14 für die Aufnahme von Heizleitern auf.

Die in der Verlegelage nach oben weisende Flächen 11 des Wärmequerverteilerelementes 10 sind eben und rechteckförmig, zwischen denen der Längskanal 12 und die Längsrillen 13 ausgebildet sind, die allesamt nach unten abgebogen sind und mit den Ein- bzw. Auslaufrundungen 15, 20 abschließen. Diese konstruktive Ausgestaltung dient dazu, die Einlauf- bzw. Auslaufbereiche des Längskanales 12 sowie der Längsrillen 13, 14 gratfrei zu gestalten. Damit ist gewährleistet, dass die Ein- und Auslaufbereiche in das Wärmequerverteilerelement 10 für die einzukommenden, in den Fig. 1 und 2 gezeigten Heizungsrohre 2 und Heizleiter 5, 6 kein Schädigungspotential darstellen, scharfe Kanten treten nicht auf, so dass die eingelegten Heizrohre 2 und die eingelegten Heizleiter 5, 6 sich problemlos in Längsrichtung bei Temperaturschwankungen bewegen können.

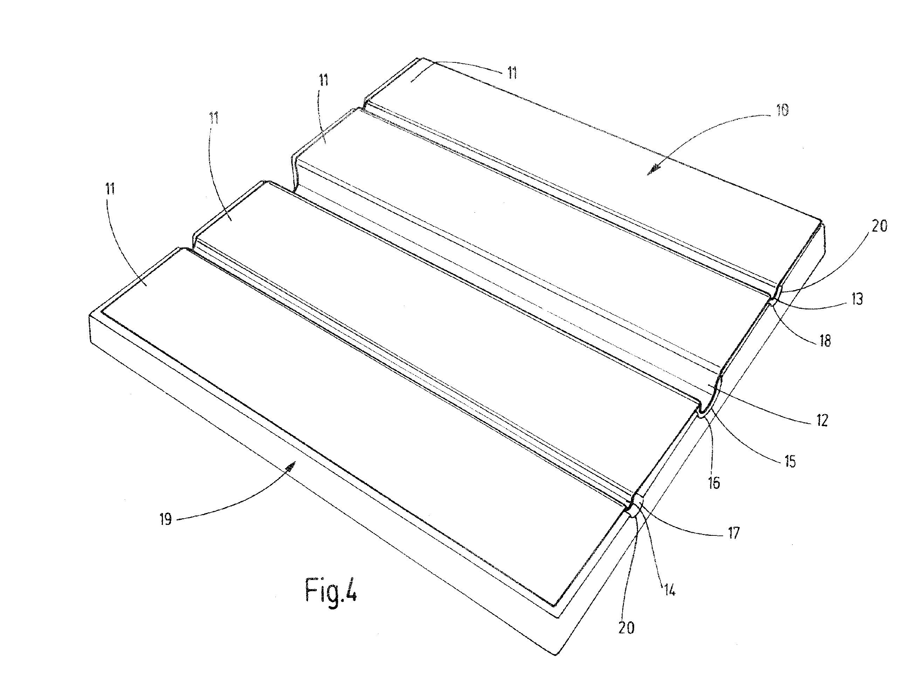

Das zu dem Wärmequerverteilerelement 10 korrespondierende Plattenelement geht aus Fig. 4 hervor. Das in Fig. 4 mit dem Bezugszeichen 19 versehene Plattenelement weist ebenfalls einen Längskanal 16 sowie zwei zu dem Längskanal 16 beabstandet angeordnete und parallel verlaufende Längsrillen 17, 18, auf, so dass das Wärmequerverteilerelement 10 der Oberflächenkontur des Plattenelementes 19 einschließlich des Längskanales 16 sowie der Längsrillen 17, 18 angepasst sind. Infolgedessen sind sowohl die Längsrillen 17, 18 als auch der Längskanal 16 nach unten abgebogen. Das Maß des Plattenelementes 19 beträgt ca. 500 mm x 1.000 mm.

Bei den in den Fig. 3 und 4 gezeigten Ausführungsformen des Wärmequerverteilerelementes 10 und des Plattenelementes 19 sind das Wärmequerverteilerelement 10 sowie das Plattenelement 19 lösbar miteinander verbunden, was sich beispielsweise dadurch realisieren lässt, dass das Wärmequerverteilerelement 10 auf das Plattenelement 19 gelegt wird, so dass sich der Längskanal 12 sowie die Längsrillen 13, 14 des Wärmequerverteilerelementes 10 in den entsprechenden Längsrillen 17, 18 und den Längskanal 16 formschlüssig eingelegt sind. Alternativ kann das Wärmequerverteilerelement 10 auch in das Plattenelement 19 eingeklemmt werden.

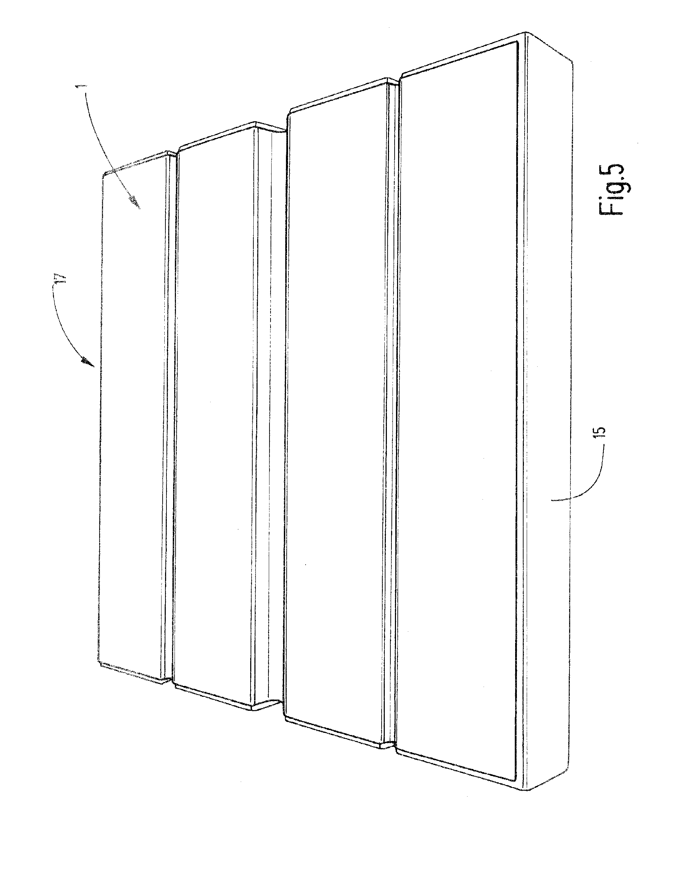

Eine Vorrichtung 1, bei der das Wärmequerverteilerelement 10 und das Plattenelement 19 miteinander verbunden sind, beispielsweise durch Verklebung, zeigt Fig. 5, so dass das Wärmequerverteilerelement 10 und das Plattenelement 19 ein einheitliches Gebilde darstellen.

Die vorliegende Erfindung beschränkt sich in ihrer Ausführung nicht auf die vorstehend angegebenen Ausführungsbeispiele. Vielmehr ist eine Anzahl von Varianten denkbar, welche von der dargestellten Lösung auch bei anders gearteten Ausführungen Gebrauch machen. Beispielsweise kann das Plattenelement 19 eine Dämmstoffplatte, eine Ökoplatte oder eine Holzfaserplatte sein. Das Wärmequerverteilerelement 10 kann beispielsweise auch aus Stahl sein. Bei den Kanälen und Rillen braucht es sich nicht um Längskanäle und Längsrillen handeln. Die Kanäle und Rillen können beispielsweise auch einen bogenförmigen Verlauf haben.

### Bezugszeichenliste:

- 1: Vorrichtung
- 2: Heizrohr
- 3, 3a: Längskanal
- 4: Plattenelement
- 5, 6: Heizleiter
- 7, 7a, 8, 8a, 13, 14, 17, 18: Längsrillen
- 9, 10: Wärmequerverteilerelement
- 11: Flächen
- 12, 16: Längskanal
- 15, 20: Ein- bzw. Auslaufrundungen
- 19: Plattenelement

## Patentansprüche

1. Verfahren zur Beheizung von Fußböden, bei dem in einem Plattenelement (4) Warmwasser durch ein in einem Kanal (3a) befindliches Heizrohr (2) geleitet wird,
**dadurch gekennzeichnet,**
**dass** in dem Plattenelement (4) zusätzlich elektrischer Strom durch einen in einer Rille (7a,8a) befindlichen Heizleiter (5,6) geleitet wird.

2. Verfahren nach Anspruch 1,
**dadurch gekennzeichnet,**
**dass** das Heizrohr (2) und der Heizleiter (5,6) in einem Wärmequerverteilerelement (9) verlaufen, das der Oberflächenkontur des Plattenelementes (4) einschließlich des Kanales (3a) und der Rillen (7a,8a) angepasst sind.

3. Verfahren nach Anspruch 1 oder 2,
**dadurch gekennzeichnet,**
**dass** der elektrische Strom durch mehr als einen Heizleiter (5,6) geleitet wird, wobei die Heizleiter (5,6) getrennt und parallel voneinander verlaufen.

4. Verfahren nach einem der Ansprüche 1 bis 3,
**dadurch gekennzeichnet,**
**dass** das Warmwasser in mehr als durch ein Heizrohr (2) geleitet wird, wobei die Heizrohre getrennt und parallel zueinander verlaufen.

5. Plattenelement (19) zur Durchführung des Verfahrens gemäß einem der Ansprüche 1 bis 4 mit einem eingeprägten Kanal (16) zur Aufnahme des Heizungsrohres (2),
**dadurch gekennzeichnet,**
**dass** es zusätzlich eine Rille (17,18) zur Aufnahme des Heizleiters (5,6) aufweist.

6. Element nach Anspruch 5,
**dadurch gekennzeichnet,**
**dass** es mehr als eine Rille (17,18) aufweist, wobei die Rillen (17,18) beidseitig des Kanales (16) verlaufen.

7. Element nach Anspruch 5 oder 6,
**dadurch gekennzeichnet,**
**dass** Ein- und Auslaufbereiche des Kanales und/oder Rillen (17,18) mit in Richtung auf die Platte weisenden Ein- bzw. Auslaufrundungen (15,20) versehen sind.

8. Wärmequerverteilerelement (10),
**dadurch gekennzeichnet,**
**dass** es eine Kontur aufweist, die der Oberflächenkontur des Plattenelementes (19) gemäß einem der Ansprüche 4 bis 7 einschließlich des Kanales (16) und Rillen (17,18) angepasst ist.

9. Element nach Anspruch 8,
**dadurch gekennzeichnet,**
**dass** es einen Kanal (12) und zu dem Kanal (12) beabstandet angeordnete und parallel verlaufende Rillen (13,14) aufweist.

10. Element nach Anspruch 8 oder 9,
**dadurch gekennzeichnet,**
**dass** es aus Aluminium ist.

11. Fußbodenheizungselement (1) aufweisend
- ein Plattenelement (19) gemäß einem der Ansprüche 4 bis 7 sowie
- ein Wärmequerverteilerelement (10) gemäß einem der Ansprüche 8 bis 10, wobei das Wärmequerverteilerelement (10) auf dem Plattenelement (19) aufgebracht ist.
